# EUROPEAN PATENT APPLICATION

(11) **EP 4 819 444 A1**
(43) Date of publication of application: **07.10.2026**
(21) Application number: 26169851.8
(22) Date of filing: 31.03.2026
(51) Int. Cl.: H02K 1/14, H02K 1/18, H02K 3/52, H02K 5/15, H02K 5/173, H02K 7/14, H02K 9/06, H02K 21/16

(54) **STATOR ASSEMBLY, BRUSHLESS MOTOR, ELECTRIC TOOL AND METHOD FOR MANUFACTURING STATOR ASSEMBLY**

(30) Priority: 03.04.2025 CN 202510417540
(71) Applicant: Techtronic Cordless GP, Anderson, SC 29621 (US)
(72) Inventor: HUANG, Wei Liang, Dongguan City (CN); LI, Zhong Peng, Dongguan City (CN); TSUI, Yung Fai, Kwai Chung (HK); SHAO, Ping, Dongguan City (CN)
(74) Representative: Zimmermann & Partner Patentanwälte mbB

(57) **Abstract**

The present application provides a stator assembly, a brushless motor, an electric tool, and a method for manufacturing a stator assembly. An outer stator subassembly of the stator assembly includes an annular member having an outer housing moulded thereon. An inner stator subassembly is fixedly attached to the outer stator subassembly and includes a bearing for supporting a shaft of a rotor. The inner stator subassembly further includes: a frame having a plurality of protrusions for supporting coils wound therearound; and an integrally formed housing having an end face with a groove for receiving the bearing. The housing is further moulded around the protrusions. In a further aspect, an electric tool is provided, which includes a motor assembly having the stator assembly. A method for manufacturing a stator assembly is also provided. The embodiments of the present application not only significantly simplify the assembly process, reduce the assembly difficulty and error rate, significantly increase the slot fill factor, and also effectively increase the coaxiality of a motor, thereby enhancing the overall performance and stability.

## Description

### Technical Field

The present application relates to the field of motors, and in particular to a brushless direct-current motor, a stator assembly for the motor, and a method for manufacturing the stator assembly.

### Background Art

Battery-driven electric tools are usually equipped with motors, which are used to drive shafts that connect various tools. Brushless motors are widely used in these tools due to their higher durability, rotational speed and torque performance compared to brushed motors.

Those skilled in the art will appreciate that brushless motors drive the rotation of a rotor and its attached shaft inside a stator by switching the current in stator windings. Specifically, the current is injected sequentially into stator coils, generating varying electromagnetic poles around an outer periphery of the stator. These electromagnetic poles are excited in a predetermined sequence to attract opposite magnetic poles of the rotor, thereby producing torque that drives the shaft of the motor to rotate and ultimately drives a driven component of an electric tool.

However, with the increasing market demand for miniaturized and high-power handheld electric tools (e.g., electric drills), higher requirements are being placed on the compactness, efficiency, and production cost of motors and their components. In the prior art, motors need to reduce their volume and increase energy efficiency while minimizing the manufacturing time and cost.

In view of the above deficiencies in the prior art, an objective of the present application is to provide a brushless motor and a stator assembly in order to solve or at least partially mitigate the problems of large size, low efficiency, high manufacturing costs, etc. of existing motors, while providing an optimized option for the market.

### Summary

The features and advantages of the present application will be set forth in detail in the following description. Some features and advantages may be derived directly from the description or learned by implementing the technical solutions disclosed in the present application. The features and advantages of the present application may be realized and obtained by technical means and combinations thereof as specified in the claims.

According to a first aspect of the present application, there is provided a stator assembly for a brushless motor, the brushless motor having an internal rotor rotating about an axis, the stator assembly including: an outer stator subassembly having an annular member; and an inner stator subassembly received within the outer stator subassembly and fixedly attached to the outer stator subassembly, the inner stator subassembly including: a frame having an annular main body and a plurality of protrusions extending outward from the annular main body, the protrusion being configured to support a coil therearound; and an integrally formed housing, where the housing is moulded integrally with the frame; and the protrusion protrudes from the housing to contact the annular member of the outer stator subassembly.

Preferably, the plurality of protrusions include a plurality of teeth extending radially outward from an outer periphery of the annular main body of the frame and spaced apart from each other. Preferably, the frame is formed by riveting a stack of a plurality of webbed and non-webbed laminations, thereby forming a plurality of holes between the teeth on the annular main body. Preferably, the frame is composed of laminated metal or a metal sheet.

Preferably, the annular member has a support moulded at least partially thereon, the support of the outer stator subassembly and the housing of the inner stator subassembly being composed of an insulating material, preferably plastic, and more preferably polyamide.

Preferably, the inner stator subassembly is fixedly connected to the outer stator subassembly by laser welding or ultrasonic welding at a plurality of positions where the protrusions are in contact with the annular member.

Preferably, the coils of the inner stator subassembly are wound by a machine operating outside the annular main body of the inner stator subassembly.

Preferably, the ratio of a cross-sectional area of a coil conductor of the tooth to a total available area of the coil of the tooth is between 45% and 55% on average.

Preferably, the inner stator subassembly further includes a bearing moulded therein for supporting a shaft of the rotor, where the bearing is received in a groove on an end face of the housing.

Preferably, a front end cover of the motor and the stator assembly are connected to each other via a pin and share the same datum plane.

According to a second aspect of the present application, there is provided a brushless motor, including: a stator assembly provided according to the first aspect of the present application; and a rotor assembly having one end supported on a bearing of the inner stator subassembly and a shaft substantially enclosed by a frame of the stator assembly, wherein the rotor assembly includes a sheath moulded therearound.

Further, the brushless motor further includes a cooling fan and at least three control wires electrically connected to stator coils.

According to a third aspect of the present application, there is provided an electric tool, including a brushless motor having a stator assembly provided according to the first aspect.

According to a fourth aspect of the present application, there is provided an electric tool, including a brushless motor according to the second aspect.

According to a fifth aspect of the present application, there is provided a method for manufacturing a stator assembly, the method including: moulding a support at least partially on an annular member to form an outer stator subassembly; moulding a housing on a bearing and a frame to form an inner stator subassembly, the frame having a plurality of teeth extending radially outward from an annular main body; arranging coil windings on the housing at positions corresponding to the teeth; and receiving the inner stator subassembly in the outer stator subassembly and connecting them together by welding. Preferably, a coil is formed on each tooth by winding a wire externally around the frame of the inner stator subassembly.

The motor assembly according to the above embodiments facilitates winding and assembly, is easy for a user to operate, and allows for more coils to be wound, thereby significantly increasing the slot fill factor. Further, the motor assembly according to the embodiments of the present application reduces the spatial requirements, achieves a more compact overall structure, and lowers the manufacturing cost. In addition, the bearing configuration of the present application can increase the push-out force of the bearing, and the pin configuration ensures precise alignment between the components by means of a single datum.

Therefore, the exemplary stator assembly, motor, electric tool and method for manufacturing a stator assembly described herein advantageously provide a motor that is smaller and more efficient, and has a higher slot fill factor compared to conventional prior art motors. The embodiments of the present application not only significantly simplify the assembly process, reduce the assembly difficulty and error rate, significantly increase the slot fill factor, and also effectively increase the coaxiality of a motor, thereby enhancing the overall performance and stability.

### Brief Description of the Drawings

In order to more clearly describe the technical solution in the embodiments of this description or in the prior art, a brief introduction to the accompanying drawings required for the description of the embodiments or the prior art will be provided below. Obviously, the accompanying drawings in the following description are merely some embodiments recited in this description. Those of ordinary skill in the art would also derive other accompanying drawings from these accompanying drawings without involving any inventive efforts. In the drawings:
Fig. 1A shows an exploded perspective view of a lower part of a brushless motor assembly according to a first embodiment of the present application, with stator coils removed for clarity.
Fig. 1B is a perspective view of the motor assembly of the first embodiment of the present application shown in Fig. 1A in an assembled state.
Fig. 1C depicts a side view of the motor assembly of the embodiment of the motor assembly of Fig. 1A in the assembled state.
Fig. 2A is an exemplary assembly view of a stator assembly of the motor assembly shown in Figs. 1A-1C.
Fig. 2B is an exploded perspective view of an inner subassembly of the stator assembly of Fig. 2A, with the stator coils removed for clarity.
Fig. 2C is an exploded perspective view of the exterior of the stator assembly according to the embodiment of the motor assembly of Fig. 2A.
Fig. 3 shows an exemplary exploded perspective view of an exemplary rotor assembly of the motor assembly shown in Fig. 1A.
Fig. 4 shows an exemplary view of an exemplary engagement and fixed connection arrangement of a portion of the outer stator assembly of Fig. 2C and the inner stator subassembly of Fig. 2B.
Fig. 5 is a schematic perspective view of a motor according to a second embodiment of the present application.
Figs. 6A and 6B are schematic exploded views of the motor shown in Fig. 5.
Figs. 7A and 7B are perspective views of the outer stator subassembly of the motor shown in Fig. 5.
Fig. 8 is a perspective view of the inner stator subassembly of the motor shown in Fig. 5.
Figs. 9A and 9B are perspective views of an inner stator lamination stack of the inner stator subassembly shown in Fig. 8.
Figs. 10A-10C are perspective views of a bobbin of the inner stator subassembly shown in Fig. 8.
Figs. 11A-11B show a stator assembly equipped with coil windings.
Fig. 12 is a perspective view of a bearing of the motor shown in Fig. 5.

### Detailed Description of Embodiments

In order for those skilled in the art to better understand the technical solutions in this description, the technical solutions in the embodiments of the present disclosure will be clearly and completely described below with reference to the accompanying drawings for the embodiments in this description. Apparently, the described embodiments are merely some of, rather than all of, the embodiments in this description. All other embodiments derived by those of ordinary skill in the art on the basis of the embodiments in the specification without creative efforts fall within the scope of protection of this description. While specific implementations are discussed, it should be understood that this is for illustrative purposes only. Those skilled in the art will appreciate that alternative components and configurations may be employed without departing from the spirit and scope of the present application.

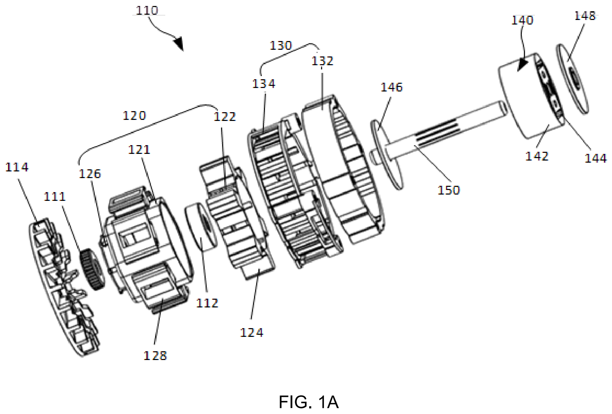

Fig. 1A is an exploded perspective view of a lower part of a brushless motor assembly 110 having a stator assembly according to a first embodiment of the present application. The motor is a four-pole six-slot motor. The stator assembly includes an inner stator assembly 120 and an outer stator subassembly 130. It should be noted that for clarity, Fig. 1A illustrates a schematic view of the brushless motor assembly 110 after stator coils, connecting wires, and top and bottom brackets have been removed.

As further described herein, the inner stator subassembly 120 includes an outer housing/housing 121 and a stator lamination frame 122. The outer housing 121 is moulded integrally with the stator lamination frame 122, so that they are firmly joined together and not separable. It should be noted that Fig. 1A shows them in a separate form for purposes of illustration.

Preferably, the outer housing 121 is made of plastic (e.g., polyamide AP66 reinforced with glass fibres), or a similar material. Any alternative material is also possible and should not be considered to be outside the scope of the present application and integrated with the stator lamination frame. The outer housing 121 serves as an insulator and support member for the stator lamination frame 122.

The inner stator subassembly 120 includes a groove 126. A bearing 112 is detachably retained in the groove 126.

The motor assembly further includes a fan 114 disposed near the bearing 112 for directing cooling air over the stator coils and the rotor to dissipate the heat flow generated by the current flowing therethrough. The motor assembly further includes a gear 111 received in a base of the outer housing for driving the fan 114.

Two housing brackets for receiving the brushless motor assembly 110 are omitted in Fig. 1A for clarity. Optionally, a first housing bracket may be disposed between the fan 114 and the motor assembly 110, and a member of the first housing bracket member may engage with a counterpart of a second housing bracket for receiving the motor assembly 110 within a space, so as to confine the motor assembly between the two housing brackets.

Preferably, the inner stator frame 122 is made of laminated steel or a steel sheet having a thickness of about 0.25 mm to minimize undesirable magnetic and electrical effects. In a further preferred embodiment of the present application, the stator frame may include 1-3 steel lamination plates.

The outer stator subassembly 130 includes an outer annulus or ring 132 and an inner housing 134. The inner housing 134 is moulded together with the outer annulus or ring 132. For example, the outer ring 132 is formed as an outer stator lamination and the inner housing 134 is formed as an overmoulded inner housing. Preferably, the inner housing 134 is made of plastic (e.g., polyamide reinforced with glass fibres). It should be emphasized that the outer ring 132 and the inner housing 134 are cross-moulded, and the inner housing 134 is integrally overmoulded onto the outer ring 132 such that they form an integrated and inseparable unit, although they are separately depicted in the figure for ease of illustration and description.

Like the outer housing 121, the inner housing 134 acts as an insulator and support member for the outer annulus or ring 132.

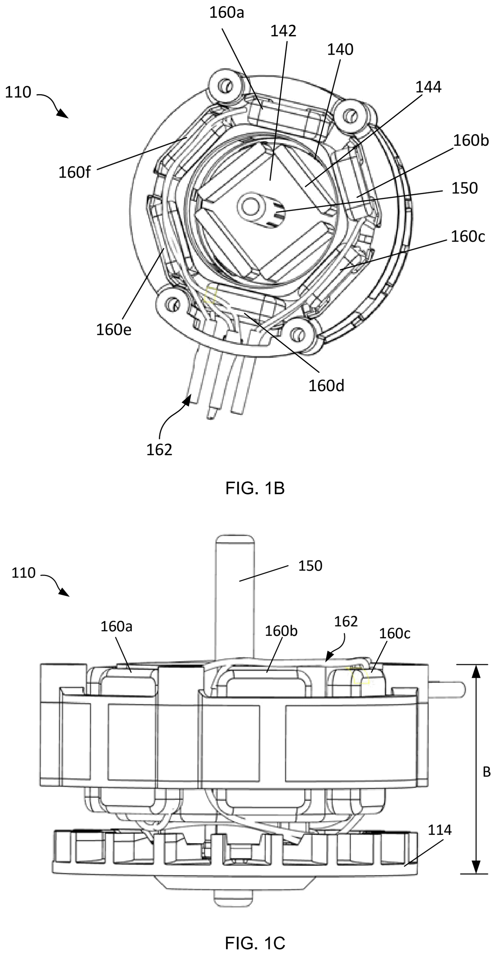

Fig. 1B shows a rotor assembly 140 according to an embodiment of the present application, which includes a rotor lamination portion 142 and a permanent magnet 144 supported therein.

Fig. 1C shows a perspective view of the motor assembly of the embodiment of the present application shown in Fig. 1A in an assembled state. A closure portion of the rotor assembly 140 is omitted in Fig. 1C, to show the stereoscopic effect and facilitate presentation. It will be appreciated that in a preferred arrangement, dimension "B" is shown to be 25% smaller than in a similar arrangement due to the improvement in the inner and outer subassemblies of the stator and the rotor described herein.

For completeness, in Figs. 1B and 1C, wires for forming the stator coils 160a-f and connecting wires 162 are included. In addition, in Figs. 1B and 1C, a shaft 150 is also visible.

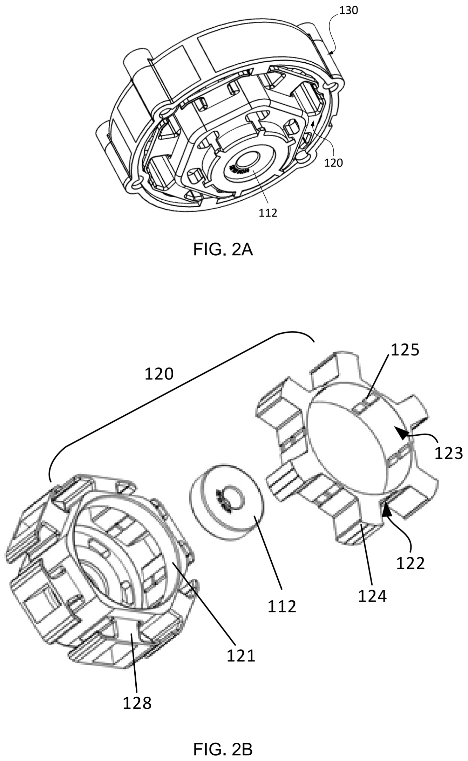

Fig. 2A is an exemplary assembly perspective view of the stator assembly of the motor assembly shown in Figs. 1A-1C. As shown, the outer stator subassembly 130 includes an outer annulus 132 and an inner housing 134, and the inner stator subassembly 120 has an outer housing 121 for supporting and a bearing 112. Preferably, the inner stator subassembly 120 is received in the outer stator subassembly 130 and is fixedly connected thereto by laser welding or ultrasonic welding or the like.

In general, a stator lamination stack of the frame 122 of the inner stator subassembly 120 and a rotor lamination stack 142 of the rotor assembly 140 include thin metal sheets connected together by stacking, welding, bonding, riveting or the like. The metal may be cobalt, nickel alloy, silicon or thin-gauge electrical steel with a thickness ranging from 0.25 mm to 0.5 mm. Those skilled in the art will appreciate that these laminations are made of individual metal sheets that are electrically insulated from each other, rather than solid metal sheets, to minimize losses due to eddy currents or hysteresis.

Fig. 2B is an exploded perspective view of the inner stator subassembly 120. The stator coils are omitted in the perspective view for ease of illustration and clarity.

As shown in the exploded perspective view, the outer housing 121 can receive the bearing 112 and the frame 122. The frame 122 has an annular main body or a circular ring or hub 123. This embodiment has six toothed portions/stator elements 124 arranged to protrude radially outward from the circular ring or hub 123, thereby forming a four-pole six-slot configuration. Preferably, the width of the central hub is chosen to be between 0.8 and 1.2 times the width of an air gap between the stator and the rotor.

The stator element 124 is received in a corresponding receptacle 128 in the outer housing 121. Holes or gaps in the frame 122 can reduce magnetic leakage and eddy currents. The sizes and positions of these holes or gaps can reduce the temperature, resistance, magnetic field current in the inner stator subassembly 120.

In general, the width of these holes is 2-3 times the air gap between the rotor and stator, and these holes extend substantially along most of the height of the frame 122. The width of a connecting portion across these holes may be 0.8 to 1.2 times the air gap between the rotor and the stator.

It will be appreciated that the wires forming the coil may be wound around the stator element 124 and the receptacle in the outer housing 121 from outside the outer housing, rather than from inside to outside as in prior art arrangements. This approach enables the wires forming the coil to be packed tighter and more neatly, and increases the slot fill factor, i.e., the ratio of the area of the wires to the area of a slot, due to tighter winding. A tighter coil enables the electrical and magnetic properties of the stator to be enhanced.

It will also be appreciated that a removable and reinstallable individual coil winding may be provided on each stator element 124, or the coil may be permanently wound around the stator element 124. This winding method improves efficiency and reduces the amount of redundant coil end wires associated with separate winding approaches.

In addition, the winding speed is much faster than the traditional way of winding from inside to outside.

It is understood that in the scientific literature, there are several definitions for the slot fill factor, typically defined as an electrical slot fill factor *f_{cu}* and a mechanical slot fill factor *fₘₑ.*

Preferably, the electrical slot fill factor *f_{cu}* is defined as the ratio of the total cross-sectional area of the wire copper (*N_{w} A_{cu}*) to the total cross-sectional area of the slot *Aₛₗₒₜ.*

In addition, the mechanical slot fill factor *fₘₑ* is defined as the ratio of the total cross-sectional area of the wires (*N_{w} A_{w}*) to the effective area of the slot *A_{eff}.* The latter is defined as the difference between the total cross-sectional area of the slot *Aₛₗₒₜ* and the area occupied by an insulating layer of the slot. The two fill factors can be described in the following mathematical formulas: where *N_{w}* is the number of wires in the slot, *A_{cu}* is the maximum copper cross-sectional area (available cross-sectional area) of a single wire, and *A_{w}* is the maximum cross-sectional area of a single wire (including its insulating layer). ${f}_{eu} = \frac{{N}_{w} {A}_{eu}}{{A}_{slot}}$ (1) ${f}_{me} = \frac{{N}_{ϖ} {A}_{ϖ}}{{A}_{eff}}$ (2)

Preferably, the shape of the slot of the stator frame may also be selected to facilitate tight and compact winding of the wires forming the coil.

In an exemplary embodiment, a conventional winding slot arrangement of a prior art stator (e.g., the stator shown in Figs. 1A-1C) may have a winding area of 56.8 mm² in a single slot, with a stator diameter of 48 mm. With a standard conventional method, the fill factor of standard-gauge wires approaches a slot fill factor of 47%. With a conventional winding machine, the stator winding time for all coils is approximately 76 seconds.

In contrast, according to the method and arrangement of the present application, in a stator having a diameter of 48 mm and configured for external filling, the winding area in a single slot is reduced to 49.9 mm², and the winding slot fill factor is increased to 65% and may be as high as 75%. With a conventional winding machine, the time required to fill all slots is approximately 38 seconds, thereby demonstrating a higher slot fill factor within a shorter time.

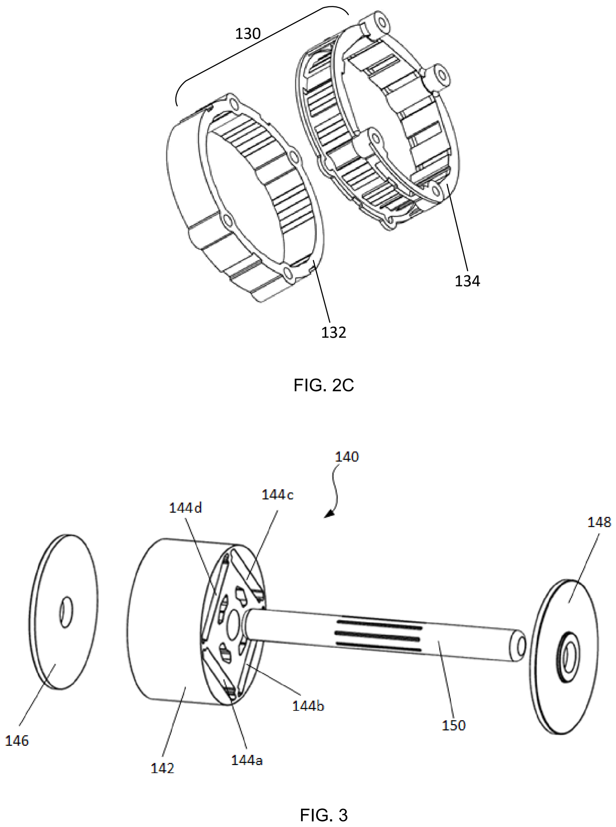

Fig. 2C is an exploded perspective view of the outer stator subassembly 130 of the embodiment of the motor assembly of Fig. 2A.

As shown in Fig. 2C, the outer stator subassembly 130 has an outer annulus 132 and an inner housing 134. The inner housing 134 is at least partially moulded together with the outer annulus 132, to generally surround the outer annulus 132.

Like the outer housing 121, the inner housing 134 mainly acts as an insulator and support member for the outer annulus 132.

Further, the stator element 124 of the inner stator subassembly 120 shown in Fig. 2B may engage with an inner surface of the outer stator subassembly 130 shown in Fig. 2C. In a preferred embodiment, each end portion of the stator element 124 is protruding, which engages with a groove on an inner surface of the metal annulus/outer annulus 132, and protrudes through a corresponding groove defined in the inner housing 134.

Fig. 3 is shown in an exploded perspective view. Similarly, like the inner stator subassembly and the outer stator subassembly, the rotor may further include moulded end closure portions 146, 148 moulded therearound. For ease of reference, the end portions are depicted spaced apart from the rotor, but it is to be understood that in an actual rotor assembly, once produced, they are not easily separated.

The moulded end portions 146, 148 of the rotor can replace copper sleeves for balancing in the prior art rotor assembly. Preferably, the moulded end portions 146, 148 of the exemplary rotor of the present application retain the components of the rotor assembly together and simplify the assembly process.

The rotor assembly 140 is supported on the shaft 150, and one end of the shaft 150 is received in the bearing 112. As described above, the bearing 112 is retained in the outer housing of the inner stator subassembly 120.

The rotor assembly 140 and the shaft 150 may be moulded together with an encapsulating plastic sheath to form an integral rotor assembly, but the encapsulating sheath is not shown herein for clarity.

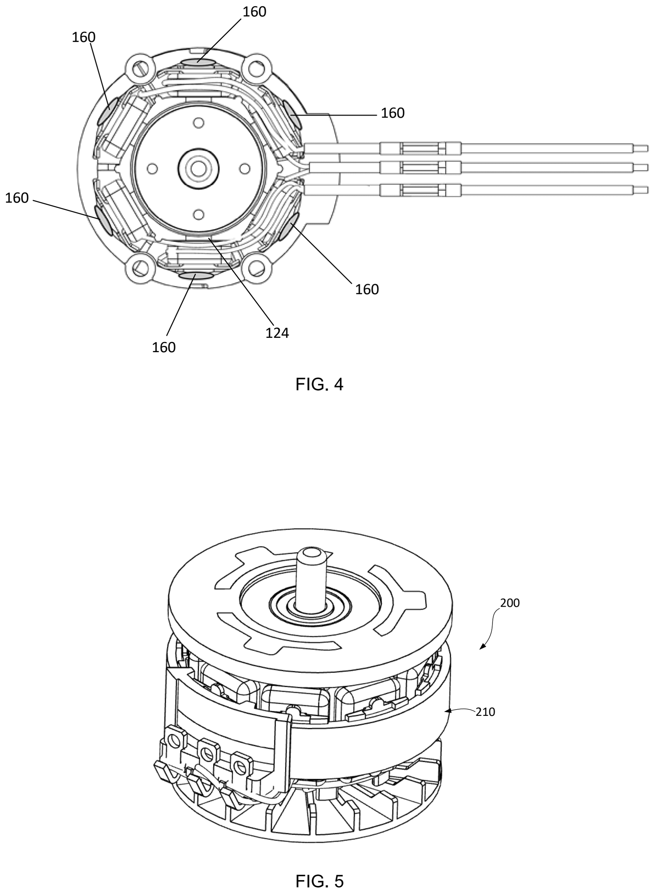

Fig. 4 is an exemplary top view of a portion of the inner stator subassembly and the outer stator subassembly, indicating a position where the two can be connected by laser or ultrasonic welding 160. In one embodiment, six stator elements 124 are provided.

A protrusion on an end portion of the stator element 124 of the inner stator subassembly engages with the outer stator subassembly, top and bottom surfaces of the inner stator subassembly and the outer stator subassembly are welded (e.g., by using ultrasonic or laser welding) together at twelve positions near the engagement positions between the annulus/housing of each stator element and the outer stator subassembly. In the embodiment shown in Fig. 4, six weld points 160 are shown from a top view of the stator assembly. This enables the subassemblies to fixedly engage together in the motor assembly.

Preferably, it will be appreciated that a tool suitable for the motor stator assembly of the present application may include any type of electric tools, such as impact drivers, drills, saws, rotary hammers, and the like.

In a second embodiment according to the present application, the present application provides a brushless direct-current motor. In contrast to the first embodiment, the components of the outer stator subassembly of the brushless direct-current motor of the second embodiment are integrally formed as an annular structure, rather than being composed of an outer annulus and an inner housing, thereby reducing the number of components, and making the structure more compact. In addition, a front end cover and the stator assembly are connected to each other via a pin and share the same datum plane, thereby increasing the coaxiality of the motor. Furthermore, the bearing of the stator assembly is provided with a groove to increase the push-out force of the bearing.

The second embodiment of the present application will be described in detail below with reference to the accompanying drawings. Components identical to or similar to the first embodiment will not be described in detail here.

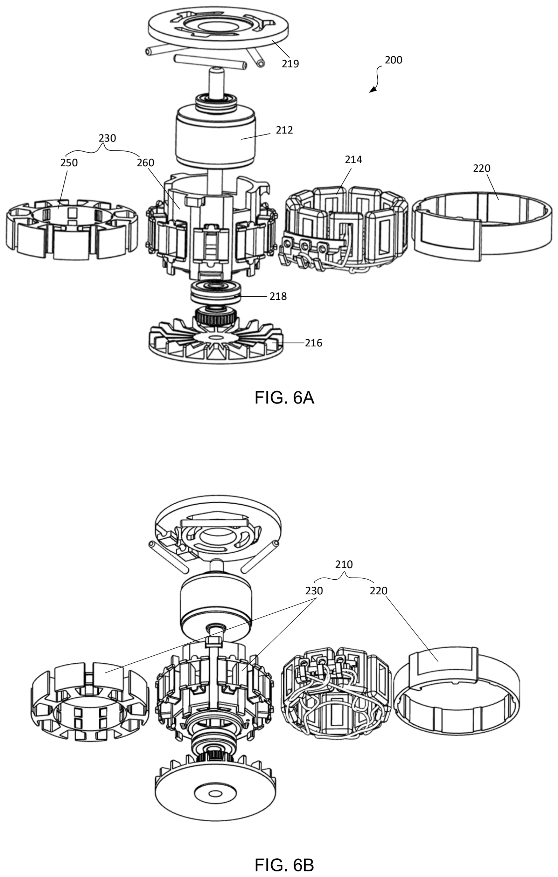

Fig. 5 shows a schematic perspective view of a brushless motor 200 according to a second embodiment of the present application. Unlike the four-pole six-slot motor of the first embodiment, this embodiment provides a six-pole nine-slot motor configuration. Figs. 6A and 6B further show exploded perspective views of the brushless motor 200 as viewed from top and bottom perspectives. As shown in Figs. 6A-7B, the brushless motor 200 includes a stator assembly 210 and a rotor assembly 212. In addition, the motor 200 further includes coil windings 214, a cooling fan 216, a bearing 218, a front cover/front bracket 219, etc. The coil windings 214 are wound around the stator assembly 210. The bearing 218 is retained in the stator assembly 210. The cooling fan 216 is disposed near the bearing 218 for directing cooling air over the stator coils and the rotor to dissipate the heat flow generated by the current flowing therethrough. The motor assembly further includes other components such as wires of the coil windings and connecting wires, the shaft of the rotor, etc., which will not be described in detail here.

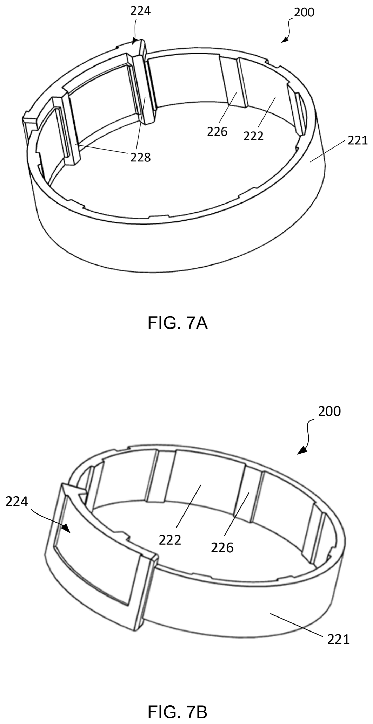

The stator assembly 210 further includes an outer stator subassembly 220 and an inner stator subassembly 230. As shown in Figs. 7A and 7B, the outer stator subassembly 220, also called a yoke, serves as a magnetic yoke of the motor. The yoke 220 is generally cylindrical without top and bottom bases, has a generally annular cross-section, and is provided with a plurality of accommodating slots 222 evenly spaced apart on its inner wall to accommodate stator teeth. The accommodating slot 222 extends through two ends of the yoke 220 in an axial direction of the magnetic yoke 220. The accommodating slots 222 are spaced apart from each other by a rib 226 formed therebetween. Parallel to the accommodating slot 222, the rib 226 extends along a height direction of the yoke 220.

A main body 221 of the yoke 220 is formed as an outer stator lamination stack by axially stacking a plurality of magnetic core laminations, and further has a support frame 224 formed integrally therewith. When manufacturing the main body 221 of the yoke 220, a plurality of magnetic core laminations are stacked to form the cylindrical main body 221 of the yoke 220, and the support frame 224 is formed by injection moulding plastic or rubber at a partial position on the outer periphery of the main body 221. In one embodiment, the support frame 224 extend circumferentially along the outer periphery of the main body 221 of the yoke 220 by a distance of approximately 1.5 slot pitches and covers the area of the exterior of the main body 221 of the yoke 220 over that extended portion. Moreover, the support frame 224 has two legs 228 extending along the rib 226 on an inner periphery of the main body 221 of the yoke 220. The legs 228 connect upper and lower portions of the support frame 224, to form the outer stator subassembly 220 by locking the support frame 224 and the main body 221 of the yoke 220 together. The main body 221 of the yoke 220 is formed integrally with the support frame 224. Unlike the first embodiment in which the outer ring 132 and the inner housing 134 are cross-moulded and the inner housing 134 is integrally overmoulded onto the outer ring 132, in this embodiment, the support frame 224 has a smaller volume, occupies only a smaller area, is only partially overmoulded onto the main body 221, and forms mainly the exterior of the main body 221.

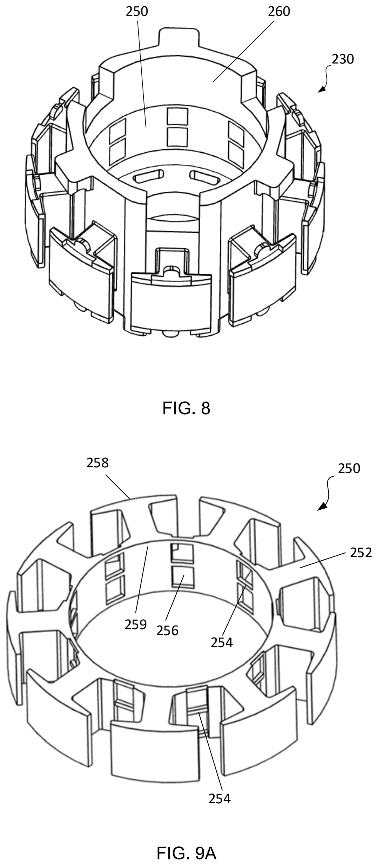

Figs. 6A-6B show the inner stator subassembly 230 including the inner stator lamination stack 250 and a bobbin 260. Further, as shown in Fig. 8, the inner stator lamination stack 250 is moulded integrally with the bobbin 260. The bobbin 260 is made of an insulating material such as plastic or similar material and serves as an insulator and support member for the inner stator lamination stack 250. The inner stator lamination stack 250 is made of laminated steel or a steel sheet having a thickness of about 0.25 mm to minimize undesirable magnetic and electrical effects.

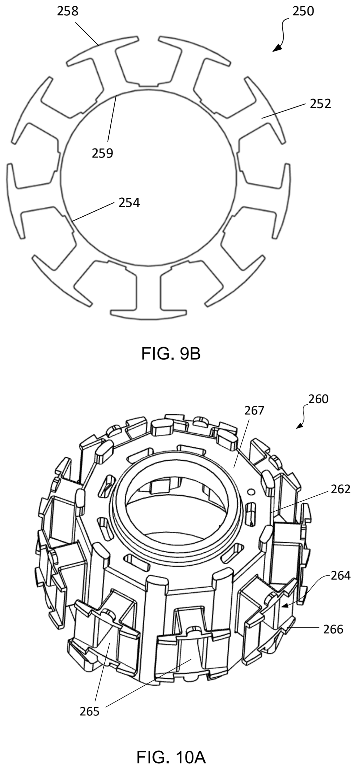

Figs. 9A-9B show the inner stator lamination stack 250. As shown, the inner stator lamination stack 250 has a plurality of integrally-formed toothed portions 252. Unlike the four-pole six-slot arrangement of the first embodiment, in this embodiment, nine toothed portions are provided, thereby forming a six-pole nine-slot motor configuration. Space can be used more efficiently and more coil windings can be arranged. Further, as shown in Fig. 9B, the toothed portion 252 is generally I-shaped, with the length of an upper end 258 slightly greater than the length of a lower end 259. The upper end 258 is in contact with an inner surface of the main body 221 of the yoke 220, and they are welded together by laser or other means. The lower ends 259 of the toothed portions 252 are connected to each other via a web 254 and are generally arranged in an annular shape. Referring to Fig. 9A, a connection portion between the toothed portions 252 is formed by a plurality of elongated webs 254. The webs 254 are parallel to each other and spaced apart by a distance, and a generally rectangular opening 256 is formed between adjacent webs 254 and the toothed portions 252. It will be appreciated that the opening 256 may be in the shape of a square, a circle, or any other shape. The opening 256 can effectively reduce magnetic leakage and improve motor performance. The web 254 is also formed by stacking stator laminations, i.e., by connecting webbed thin metal sheets and non-webbed thin metal sheets together by stacking, welding, bonding, riveting or other means, to form an integral inner stator lamination stack 250.

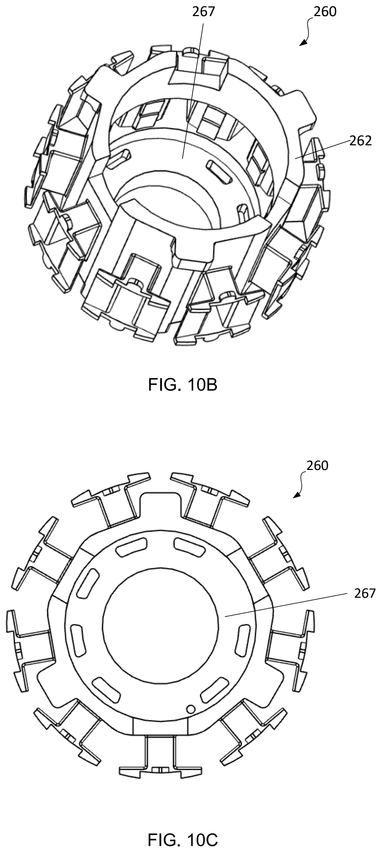

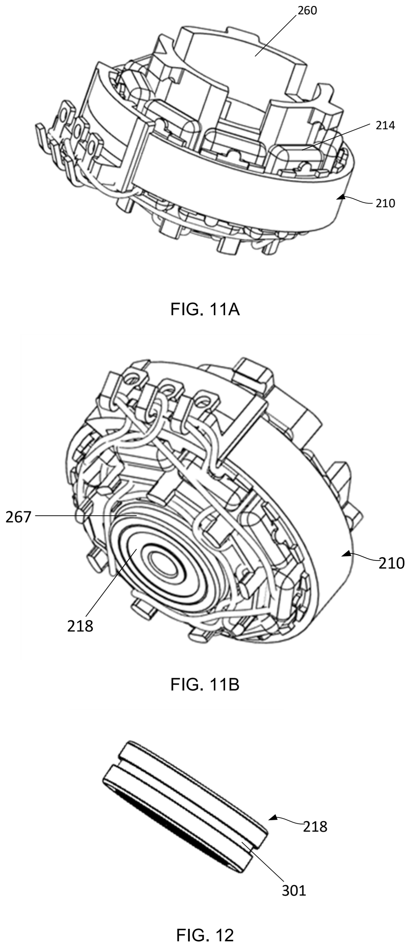

Figs. 10A-10B are perspective views of the bobbin 260 as viewed from below and above. Fig. 10C is an elevation view of the bobbin 260. As shown, the bobbin 260 has a generally cylindrical main body 262 and a plurality of winding units 264. The plurality of winding units 264 radially surround an outer periphery of the main body 262. The winding unit 264 extends from the main body 262 and forms a T-shape for placing a respective coil winding. Adjacent winding units 264 are spaced apart from each other. The winding unit 264 has a slot 265 penetrating therethrough for receiving the toothed portion 252. A length direction of the slot 265 is perpendicular to a central axis of the cylindrical main body 262. The slot 265 is formed as a passage penetrating through the main body 262 and the winding unit 264. An outer periphery of the end of the winding unit 264 away from the main body 262 is formed as a flange 266. A portion between the flange 266 and the main body 262 is configured to place the coil winding 214, such that the coil winding can be effectively fixed. A top end of the flange 266 is formed in the shape of a track for receiving the upper end 258 of the toothed portion 252 and exposing the upper end to the outside such that the upper end is received in the accommodating slot 222 of the inner surface of the yoke 220, and fits against the inner surface, and they are welded together by laser or other means. Figs. 11A-11B show a stator assembly equipped with windings. The motor assembly according to the above embodiments facilitates winding and assembly, and allows for more winding coils to be arranged, thereby significantly increasing the slot fill factor.

In addition, as shown in Figs. 10A-10C, a lower end 267 of the bobbin 260 is a hollow circular annulus moulded integrally with the main body and serves as a rear bracket. In this way, the entire stator assembly does not require an additional separate rear bracket assembly, thereby saving space and making the overall structure more compact. In addition, the embodiment of the present application also saves cost by reducing the number of parts.

Further, in this embodiment, the bearing 218 may also be moulded integrally with the bobbin 260, as shown in Fig. 11B. In the motor structure of this embodiment, the bearing can be fastened more tightly, so that the whole structure is more compact and tighter, and the assembly process is simpler, and is easy for the user to operate. The wires of the coil are connected to conductive contacts provided on the support frame 224 of the yoke 220.

In addition, as shown in Fig. 12, the bearing 218 is also provided with a groove 301 in the middle, so that the push-out force of the bearing can be increased, while further reducing the size of the motor. The groove 301 enables the bearing 218 to be tightly moulded into the bobbin 260.

In view of the above, the structure of the present application is of an integrated design that closely combines the bobbin 260, the bearing 218 and the inner stator lamination stack 250 through an overmoulding process, forming an integral component, eliminating the need for a rear bracket. Moreover, to simplify the mounting of the front cover/front bracket 219, the bobbin 260 is provided with a plurality of outward extending projections on the end face facing the front cover 219, while the front cover 219 is provided with a plurality of grooves that mate with the projections. An end of the projection is T-shaped, and the front cover 219 is provided with two pin holes at the bottom corresponding to the groove. The front cover/front bracket 219 is connected to the inner stator subassembly 230 via pins 281 when the projection mates with the groove. This design not only reduces the number of parts and components, but also ensures precise alignment between the components with a single datum, thereby facilitating assembly and increasing the coaxial ity of the motor.

The embodiments of the present application not only significantly simplify the assembly process, reduce the assembly difficulty and error rate, significantly increase the slot fill factor, and also effectively increase the coaxiality of a motor, thereby enhancing the overall performance and stability. This structural design is particularly suitable for applications requiring high precision and assembly efficiency, and can meet the needs of modern industry for efficient production and high-quality products.

The exemplary stator assembly, motor, electric tool and method for manufacturing a stator assembly described herein advantageously provide a motor that is smaller and more efficient, and has a higher slot fill factor compared to conventional prior art motors.

The features disclosed herein can reduce manufacturing costs and reduce the time required to wind stator coils due to fewer components and faster winding enabled by radially outward extending protrusions of the inner stator subassembly.

The above embodiments are described by way of example only. Many variations may be made without departing from the scope of the present application as defined in the appended claims.

The various embodiments in this description are described in a progressive manner, and the same or similar parts between the embodiments can be referred to each other. Each embodiment focuses on describing the differences from other embodiments. In particular, the system embodiments are basically similar to the method embodiments, so the description is relatively simple. For relevant details, reference can be made to the description of the method embodiments. In this description, the description with reference to terms such as "an embodiment" , "some embodiments" , "an example" , "a specific example" or "some examples" means that specific features, structures, materials or characteristics, described in conjunction with the embodiments or examples, are included in at least one embodiment or example of this description. In this description, the illustrative expression of the above terms is not necessarily aimed at the same embodiment or example. Moreover, the specific features, structures, materials or characteristics described can be combined in any one or more embodiments or examples in any suitable manner. In addition, without any contradiction, those skilled in the art may bind and combine different embodiments or examples and features of the different embodiments or examples described in this description.

The foregoing description is merely illustrative of the embodiments of the present application, and is not intended to limit the present application. Various changes and variations may be made to the present application for those skilled in the art. Any modification, equivalent replacement, improvement and the like made within the spirit and principles of the present application should fall within the scope of protection of the present application.

While the present application has been described in detail with reference to certain preferred embodiments, variations and modifications as described and defined in the appended claims fall within the spirit and scope of the present application.

## Claims

1. A stator assembly for a brushless motor, the brushless motor having an internal rotor rotating about an axis, the stator assembly comprising:
an outer stator subassembly having an annular member; and
an inner stator subassembly received within the outer stator subassembly and fixedly attached to the outer stator subassembly, the inner stator subassembly comprising:
a frame having an annular main body and a plurality of protrusions extending outward from the annular main body, the protrusion being configured to support one of a plurality ofcoils therearound; and
an integrally formed housing,
**characterized in that** the housing is moulded integrally with the frame; and
the protrusion protrudes from the housing to contact the annular member of the outer stator subassembly.

2. The stator assembly according to claim 1, **characterized in that** the plurality of protrusions comprise a plurality of teeth extending radially outward from an outer periphery of the annular main body of the frame and spaced apart from each other.

3. The stator assembly according to claim 2, **characterized in that** the frame is formed by riveting a stack of a plurality of webbed and non-webbed laminations, thereby forming a plurality of holes between the teeth on the annular main body.

4. The stator assembly according to claim 1, **characterized in that** the frame is composed of laminated metal or a metal sheet.

5. The stator assembly according to any one of the preceding claims, **characterized in that** the annular member has a support moulded at least partially thereon, the support and the housing of the inner stator subassembly being composed of an insulating material.

6. The stator assembly according to any one of the preceding claims, **characterized in that** the inner stator subassembly is fixedly connected to the outer stator subassembly by laser welding or ultrasonic welding at a plurality of positions where the protrusions are in contact with the annular member.

7. The stator assembly according to any one of claims 1-6, **characterized in that** the plurality of coils of the inner stator subassembly are wound by a machine operating outside the annular main body of the inner stator subassembly.

8. The stator assembly according to any one of claims 2-6, **characterized in that** the ratio of a cross-sectional area of a coil conductor of the tooth to a total available area of the coil of the tooth is between 45% and 55% on average.

9. The stator assembly according to any one of the preceding claims, **characterized in that** the inner stator subassembly further comprises a bearing moulded therein for supporting a shaft of the rotor, wherein the bearing is received in a groove on an end face of the housing.

10. The stator assembly according to any one of the preceding claims, **characterized in that** a front end cover of the motor and the stator assembly are connected to each other via a pin and share the same datum plane.

11. A brushless motor, **characterized by** comprising:
a stator assembly according to any one of claims 1-10; and
a rotor assembly having one end supported on a bearing of the inner stator subassembly and a shaft substantially enclosed by a frame of the stator assembly, wherein the rotor assembly comprises a sheath moulded therearound.

12. The brushless motor according to claim 11, **characterized by** further comprising a cooling fan and at least three control wires electrically connected to the plurality of coils.

13. An electric tool, **characterized by** comprising a brushless motor having a stator assembly according to any one of claims 1-10.

14. An electric tool, **characterized by** comprising a brushless motor according to claim 11 or 12.

15. A method for manufacturing a stator assembly, **characterized by** comprising:
moulding a support at least partially on an annular member to form an outer stator subassembly;
moulding a housing on a bearing and a frame to form an inner stator subassembly, the frame having a plurality of teeth extending radially outward from an annular main body;
arranging coil windings on the housing at positions corresponding to the teeth;
receiving the inner stator subassembly in the outer stator subassembly and connecting them together by welding; and
optionally further comprising forming a coil on each tooth by winding a wire externally around the frame of the inner stator subassembly.
